# FASCICULE DE BREVET EUROPEEN

(11) **EP 2 950 512 B1**
(45) Date de publication et mention de la délivrance du brevet: **21.10.2020**
(21) Numéro de dépôt: 15168956.9
(22) Date de dépôt: 22.05.2015
(51) Int. Cl.: H04M 1/2746, H04M 1/27475

(54) **PROCEDE ET DISPOSITIF DE CONTROLE DE L'AFFICHAGE D'UN GROUPE DE CONTACTS**
VERFAHREN UND VORRICHTUNG ZUR ANZEIGEKONTROLLE EINER GRUPPE VON KONTAKTEN
METHOD AND DEVICE FOR CONTROLLING THE DISPLAY OF A GROUP OF CONTACTS

(30) Priorité: 27.05.2014 FR 1454786
(43) Date de publication de la demande: 02.12.2015
(73) Titulaire: ORANGE, 75015 Paris (FR)
(72) Inventeur: Floury, Cédric, 22700 Perros Guirec (FR); Mercier, Violaine, 22560 Pleumeur Bodou (FR)

(56) Documents cités:
- WO-A1-02/082343
- KR-A- 20060 004 047
- KR-A- 20090 017 011
- US-A1- 2010 062 753
- US-A1- 2010 105 441

## Description

L'invention se situe dans le domaine des terminaux de communication.

Pour initier une communication à partir de son terminal, un utilisateur peut sélectionner l'identité destinatrice de la communication à partir d'un contact enregistré dans un carnet d'adresses associé au terminal. En général, les contacts sont présentés à l'utilisateur sous la forme d'une liste ordonnée affichée sur un écran du terminal. Par exemple, une telle liste peut être triée selon un ordre alphabétique à partir du nom des contacts.
La surface d'affichage du terminal étant en général de taille réduite, la liste des contacts ne peut en général pas être affichée entièrement. Pour sélectionner un contact avec lequel il souhaite initier une communication, l'utilisateur doit alors parcourir la liste des contacts en interagissant sur le terminal pour modifier l'affichage et faire défiler la liste des contacts jusqu'à ce qu'il identifie le contact avec lequel il souhaite initier une communication.
Lorsque l'utilisateur dispose d'un grand nombre de contacts enregistrés dans le carnet d'adresses associé à son terminal, par exemple plus d'une cinquantaine de contacts, la sélection d'un contact prédéterminé peut alors devenir fastidieuse si le contact n'est pas classé en début de liste.
Les terminaux actuels proposent un mécanisme de recherche d'un contact dans le carnet d'adresses à partir de l'entrée d'une partie du nom du contact dans un champ de recherche affiché à l'utilisateur. Ce mécanisme nécessite que l'utilisateur ait mémorisé le nom sous lequel le contact a été enregistré, ce qui n'est pas toujours le cas lorsque l'utilisateur ne communique pas souvent avec ce contact ou lorsque l'enregistrement du contact a été fait suite à la réception par le terminal d'une fiche d'informations du contact. Dans ce dernier cas, l'utilisateur n'a alors pas eu à entrer le nom du contact pour l'enregistrer et a donc moins de chance de s'en souvenir. De plus, le mécanisme de recherche nécessite un certain nombre d'interactions de l'utilisateur sur le terminal pour lancer la recherche.
Le document US2008/0146190 A1 décrit un procédé permettant d'afficher sur le terminal de l'utilisateur une liste ordonnée des contacts triée en fonction de la fréquence avec laquelle l'utilisateur communique avec chaque contact. Ainsi, les contacts avec lesquels l'utilisateur communique le plus souvent sont classés en début de liste. Un tel procédé met à jour la liste ordonnée des contacts et fournit une liste dynamique dans laquelle les contacts peuvent être classés de manière différente entre chaque usage du terminal par l'utilisateur. Lorsque l'utilisateur souhaite communiquer avec un contact qui n'est pas classé en début de liste, il devient plus difficile d'identifier ce contact car l'ordonnancement de la liste ne suit plus un ordre prédéterminé selon lequel l'utilisateur peut facilement se repérer à l'intérieur de la liste.
Dans l'art antérieur, certaines représentations permettent d'afficher des contacts préférés de l'utilisateur sur une interface séparée de la liste des contacts du terminal. Afin de sélectionner un contact, l'utilisateur doit d'abord sélectionner une interface, ce qui augmente le nombre d'interactions de l'utilisateur sur le terminal pour sélectionner un contact. De plus, si l'utilisateur sélectionne l'interface des contacts préférés et que le contact avec lequel l'utilisateur souhaite communiquer n'est pas sur cette interface, l'utilisateur doit sélectionner une autre interface présentant les contacts du terminal.
Le document KR 2006 0004047 A décrit une méthode d'affichage d'une liste de contacts dans laquelle la taille de caractères d'affichage des informations d'identité du contact diffère selon la fréquence de communication avec ce contact.
Le document US 2010/105441 A1 décrit une méthode d'affichage des contacts selon plusieurs groupes dépendant de leur fréquence de communication. Les groupes peuvent avoir des cadres et des caractères de taille différente.
Le document KR 2009 0017011 A décrit un mode d'affichage d'un menu dans lequel les éléments les plus souvent utilisés sont accentués.
Le document US 2010/062753 A1 décrit un affichage de notification associée à un visuel d'un contact mais dans une fenêtre différente et de façon non ordonnée.
Le document WO 02/082343 A1 décrit un affichage de visuel représentant des contacts et dont la taille dépend de la fréquence de contact.
Ces documents de l'état de l'art ne permettent pas d'afficher le contenu de messages échangés avec des contacts privilégiés tout en bénéficiant d'une mise en avant de ces contacts dans un affichage visible et ordonné.

Un des buts de l'invention est d'apporter des améliorations par rapport à l'état de la technique.
Elle propose à cet effet un procédé de contrôle de l'affichage selon la revendication 1. Ainsi, le procédé selon l'invention fournit à l'utilisateur d'un terminal un affichage des contacts associés au terminal selon un ordre prédéterminé et sur lequel des contacts sont représentés selon différentes tailles sur l'écran du terminal. Ainsi, l'utilisateur conserve un parcours aisé parmi la liste des contacts de son terminal puisque les contacts sont affichés selon un ordre prédéterminé que l'utilisateur connait. Dans l'art antérieur, les contacts du groupe de contacts sont affichés dans des cadres de tailles identiques. Le procédé selon l'invention modifie l'affichage d'au moins un contact remplissant le deuxième critère prédéterminé de sorte à afficher le contact déterminé dans un cadre plus grand.
L'utilisateur peut ainsi facilement identifier sur l'écran du terminal les contacts qui sont affichés selon une taille plus grande que d'autres contacts. Par exemple, les contacts du groupe qui sont affichés dans un cadre plus grand correspondent à des contacts avec lesquels l'utilisateur communique le plus souvent ou à des contacts pour lesquels l'utilisateur a positionné un paramètre de préférence.
Les contacts associés au terminal peuvent correspondre aux contacts enregistrés dans le carnet d'adresses du terminal ou aux contacts d'un journal d'appels du terminal, ou encore à une liste de contacts d'un service de réseau social, etc...
L'invention s'applique à tous modes de représentation d'un groupe de contacts d'un terminal. Par exemple, l'invention s'applique à un mode de représentation affichant les contacts d'une liste de contacts sous la forme d'une suite de cadres comprenant le nom du contact et placés les uns au-dessous des autres selon ledit ordonnancement. Un tel mode de représentation est classiquement utilisé dans les terminaux pour l'affichage des contacts d'un carnet d'adresses ou d'un journal d'appels.
Selon un autre exemple, l'invention s'applique également à un mode de représentation affichant les contacts d'un groupe de contacts sous la forme d'une mosaïque de cadres, chaque cadre comprenant par exemple la photo du contact.
Les différents modes ou caractéristiques de réalisation mentionnés ci-après peuvent être ajoutés indépendamment ou en combinaison les uns avec les autres, aux caractéristiques du procédé défini ci-dessus.
Selon un autre mode particulier de réalisation de l'invention, le deuxième critère correspond à la fréquence avec laquelle le terminal et le contact considéré lors de l'étape d'ordonnancement établissent des communications.
Selon un autre mode particulier de réalisation de l'invention, le cadre agrandi est affiché dans une même fenêtre d'affichage que les cadres de taille prédéterminée, sur le dispositif d'affichage du terminal.
Avantageusement, le procédé selon l'invention fournit à l'utilisateur la liste de ses contacts sur une unique fenêtre d'affichage. Les contacts sont affichés au sein de la même liste ordonnée quelle que soit la taille du cadre dans lequel ils sont affichés. L'utilisateur n'a pas besoin de naviguer entre différentes fenêtres selon que le contact recherché remplit ou non le deuxième critère.
Selon un autre mode particulier de réalisation de l'invention, lorsqu'un élément relatif à une communication avec un contact est également affiché dans le cadre de taille prédéterminée dans lequel les informations d'un contact sont affichées, pour le au moins un contact remplissant le deuxième critère prédéterminé, au moins un élément complémentaire relatif à ladite communication est affiché dans ledit cadre agrandi.
Selon ce mode particulier de réalisation de l'invention, le procédé d'affichage permet de fournir à l'utilisateur pour les contacts affichés dans un cadre plus grand, des éléments complémentaires relatifs à une communication établie avec ces contacts. Par exemple, un élément relatif à une communication correspond à une partie d'un message échangé avec le contact, par exemple un message SMS ou MMS ou un message d'une session de messages instantanés. Dans l'art antérieur, lorsque le contact est affiché dans un cadre de taille prédéterminée, seule la première ligne de l'élément relatif à la communication, ici la première ligne du message, est affichée. Selon ce mode particulier de réalisation de l'invention, au moins une deuxième ligne du message peut être affichée, ou le message entier peut être affiché. Ainsi, l'utilisateur peut lire l'information du dernier message échangé avec le contact, sans nécessiter d'interaction supplémentaire sur le terminal.
Un élément relatif à une communication peut aussi correspondre à une information de réception d'un appel en provenance dudit contact ou d'émission d'un appel vers ledit contact, une telle information étant enregistrée dans un journal d'appels du terminal. Selon le mode particulier de réalisation de l'invention décrit ici, l'élément complémentaire relatif à la communication peut correspondre à un message ou à un objet multimédia que le contact a envoyé lors de la communication. L'utilisateur dispose ainsi de l'élément complémentaire sans avoir à sélectionner le contact dans la liste pour avoir accès à l'élément complémentaire.
Selon un autre mode particulier de réalisation de l'invention, lorsque le cadre dans lequel un contact du groupe de contacts est affiché comprend une couleur prédéterminée ou une image prédéterminée, le procédé comprend en outre une étape de modification de la couleur ou de l'image dudit cadre en fonction de l'ancienneté de la dernière communication établie avec ledit contact.
Selon ce mode particulier de réalisation de l'invention, l'utilisateur identifie plus facilement des contacts avec lesquels il ne communique pas souvent grâce à la modification de la couleur ou de l'image associée au cadre dans lequel ces contacts sont affichés. La couleur associée au cadre peut correspondre à la couleur de fond du cadre, ou au contour du cadre ou encore à la couleur de la police d'écriture des informations du contact affichées dans le cadre. Par exemple, la couleur du cadre peut être modifiée de sorte à être d'autant plus claire ou transparente que la dernière communication établie avec le contact est ancienne.
Selon un autre exemple, le cadre comprend une image, par exemple une photo représentant le contact. L'image comprise dans le cadre subit un traitement de sorte que les couleurs de l'image sont dégradées. L'image est modifiée de sorte à être d'autant plus claire ou transparente que la dernière communication établie avec le contact est ancienne.
L'invention concerne aussi un dispositif de contrôle de l'affichage selon la revendication 5. Selon un mode particulier de réalisation de l'invention, le module de traitement est apte à modifier une couleur utilisée dans la représentation d'un cadre en fonction de l'ancienneté de la dernière communication établie avec ledit contact.
L'invention concerne aussi un terminal comprenant un dispositif de contrôle de l'affichage selon l'un quelconque des modes particuliers de réalisation décrits ci-dessus.
Dans un mode particulier de réalisation de l'invention, les différentes étapes du procédé de contrôle de l'affichage d'un groupe de contacts sont mises en œuvre par des instructions de programmes d'ordinateurs.

En conséquence, l'invention vise aussi un programme d'ordinateur selon la revendication 7 sur un support d'informations, ce programme étant susceptible d'être mis en œuvre respectivement dans un terminal ou plus généralement dans un ordinateur, ce programme comportant des instructions adaptées à la mise en œuvre des différentes étapes du procédé de contrôle de l'affichage d'un groupe de contacts qui vient d'être décrit.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.
L'invention vise aussi un support d'informations lisible par un ordinateur, et comportant des instructions d'un programme d'ordinateur tel que mentionné ci-dessus.
Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.
D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.
Alternativement, le support d'informations peut être un circuit intégré dans lequel le programme est incorporé, le circuit étant adapté pour exécuter ou pour être utilisé dans l'exécution du procédé de contrôle de l'affichage d'un groupe de contacts en question.
Les avantages du programme d'ordinateur comportant des instructions adaptées à la mise en œuvre des différentes étapes du procédé de contrôle de l'affichage d'un groupe de contacts sont identiques à ceux présentés en relation avec le procédé en question selon l'un quelconque des modes particuliers de réalisation mentionnés ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre des étapes du procédé de contrôle de l'affichage d'un groupe de contacts associés à un terminal selon un mode particulier de réalisation de l'invention,
- la figure 2 illustre schématiquement un dispositif de contrôle de l'affichage d'un groupe de contacts associés à un terminal selon un mode particulier de réalisation de l'invention,
- la figure 3A présente une représentation de l'affichage d'un groupe de contacts associés à un terminal résultant du procédé de contrôle de l'affichage selon un mode particulier de réalisation de l'invention,
- la figure 3B présente une représentation de l'affichage d'un groupe de contacts associés à un terminal résultant du procédé de contrôle de l'affichage selon un autre mode particulier de réalisation de l'invention,
- la figure 4 présente une représentation de l'affichage d'un groupe de contacts associés à un terminal résultant du procédé de contrôle de l'affichage selon un autre mode particulier de réalisation de l'invention.

### Description d'un mode particulier de réalisation de l'invention

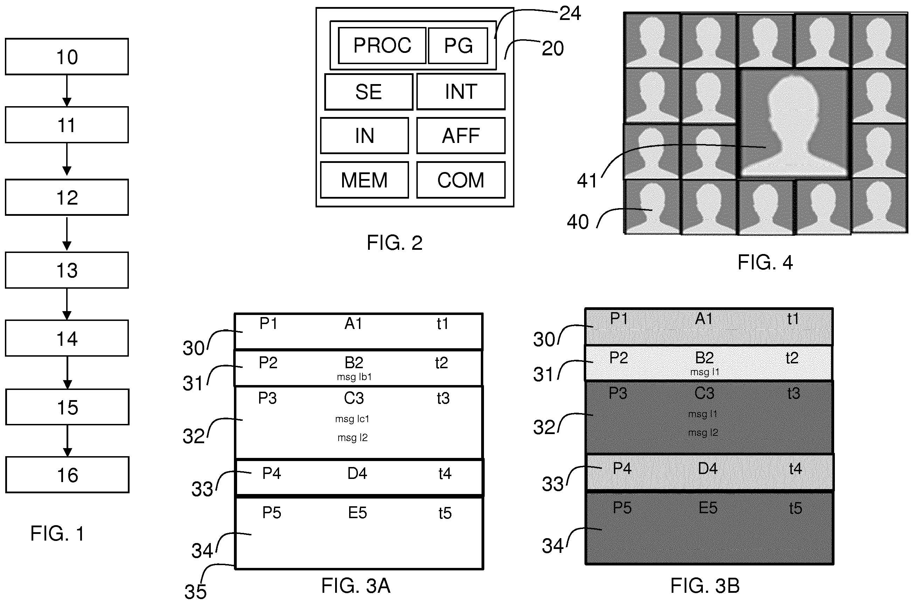

La figure 1 illustre des étapes du procédé de contrôle de l'affichage d'un groupe de contacts associés à un terminal selon un mode particulier de réalisation de l'invention.
Le groupe de contacts associés au terminal correspond par exemple aux contacts enregistrés dans le carnet d'adresses du terminal ou aux contacts enregistrés dans un journal d'appels du terminal, ou encore à une liste de contacts d'un service de réseau social enregistrée sur un serveur hébergeant le site du réseau social.
Le procédé de contrôle de l'affichage comprend une étape 10 d'ordonnancement du groupe de contacts associés au terminal selon un premier critère prédéterminé. Lorsque le groupe de contacts à afficher correspond aux contacts du carnet d'adresses du terminal, le premier critère prédéterminé correspond à l'ordre alphabétique. Les contacts sont alors triés par ordre alphabétique en fonction du nom associé à chaque contact.
Selon une autre variante, lorsque le groupe de contacts à afficher correspond aux contacts enregistrés dans un journal d'appels du terminal, le premier critère prédéterminé correspond à l'ordre chronologique inversé. Dans cette variante, les contacts du groupe sont triés en fonction de la date et de l'heure de la dernière communication établie entre le contact et le terminal. Selon cette variante, le contact ayant établi la communication la plus récente avec le terminal est le premier contact du groupe ordonné.
Lors d'une étape 11, pour chaque contact du groupe, il est procédé à une vérification d'un deuxième critère prédéterminé.
Un tel deuxième critère prédéterminé peut correspondre à la fréquence de communications établies entre le contact considéré et le terminal. Le contact considéré rempli le deuxième critère lorsque la fréquence de communications entre le contact considéré et le terminal atteint une valeur prédéterminée. La fréquence de communications entre un contact et le terminal peut être obtenue en mesurant le nombre de communications établies entre ledit contact et le terminal pendant une période déterminée, par exemple sur la période des 7 jours précédents ou de quelques semaines précédentes, etc... Dans cette variante, si la fréquence de communications entre le contact et le terminal est par exemple supérieure à 10 pendant les 7 derniers jours, la vérification du deuxième critère prédéterminé est positive. Dans le cas contraire, la vérification du deuxième critère prédéterminé est négative.
Selon une autre variante, le deuxième critère prédéterminé est mis en œuvre en déterminant les contacts du groupe de contacts ayant établis le plus grand nombre de communications avec le terminal sur une période prédéterminée, par exemple les 7 derniers jours ou le mois dernier. Selon cette variante, les contacts du groupe de contacts sont classés dans un ordre décroissant en fonction du nombre de communications établies avec le terminal pendant la période prédéterminée. Les contacts du groupe de contacts remplissant le deuxième critère prédéterminé sont alors les N premiers contacts selon ce classement. N peut être un paramètre fixé par l'utilisateur du terminal, ou fixé par défaut à 5, 10, ou n'importe quelle autre valeur.
Selon encore une autre variante, le deuxième critère prédéterminé correspond à un paramètre de préférence positionné au préalable par un utilisateur du terminal pour le contact considéré. Lorsque le paramètre de préférence est positionné à vrai, la vérification du deuxième critère prédéterminé est positive pour le contact considéré. Dans le cas contraire, la vérification du deuxième critère prédéterminé est négative.
Lors d'une étape 12, pour le contact considéré à l'étape 11, des paramètres d'affichage sont déterminés en fonction du résultat de la vérification effectuée à l'étape 11. Si la vérification est négative, les paramètres d'affichage du contact considéré sont les paramètres classiques d'affichage d'un contact sur une interface d'affichage du terminal. Par exemple, de tels paramètres correspondent à la taille d'un cadre de taille prédéterminée par l'interface, par exemple un rectangle de N pixels par M pixels ou un carré de N pixels de côté.
Si la vérification de l'étape 11 est positive, les paramètres d'affichage pour le contact considéré sont déterminés de sorte à agrandir le cadre de taille prédéterminée correspondant aux paramètres classiques. Par exemple, les paramètres d'affichage correspondent à un rectangle de taille 2xN pixels par M pixels. Selon cet exemple, le cadre dans lequel les informations du contact seront affichées est deux fois plus haut que le cadre dans lequel les informations d'un contact ne remplissant pas le deuxième critère prédéterminé sont affichées. Selon un autre exemple, le cadre peut correspondre à un carré de taille 2xN pixels par 2xN pixels.
Les étapes 10 à 12 peuvent être effectuées régulièrement par le terminal, indépendamment du fait que l'utilisateur consulte le groupe des contacts. Ou bien, les étapes 10 à 12 peuvent être effectuées suite à une étape 13 d'interaction utilisateur demandant l'affichage du groupe de contacts.
L'étape 13 peut correspondre à une interaction de l'utilisateur sur le terminal demandant l'ouverture du carnet d'adresses associé au terminal. L'étape 13 peut aussi correspondre à une interaction de l'utilisateur sur le terminal demandant l'ouverture du journal d'appels du terminal.
Lorsque les étapes 10 à 12 sont effectuées suite à l'étape 13, l'affichage du groupe de contacts est alors mise à jour dynamiquement de sorte que la vérification du deuxième critère prédéterminé est mise en œuvre à partir de mesures récentes lorsque le deuxième critère prédéterminé à vérifier par un contact correspond à la fréquence de communications entre le contact et le terminal.
Suite à l'étape 13, au moins un sous-groupe du groupe de contacts est affiché lors d'une étape 14 sur l'écran du terminal en fonction de l'ordonnancement défini à l'étape 10 et des paramètres d'affichage déterminés lors de l'étape 12. Le nombre de contacts du sous-groupe du groupe de contacts affiché lors de l'étape 14 dépend de la surface d'affichage sur l'écran du terminal dédiée à l'affichage du groupe de contacts et de la taille des cadres dans lesquels les informations relatives à chaque contact sont affichées. La surface d'affichage est définie par une fenêtre affichée par une interface d'affichage du système d'exploitation du terminal.
Au cours de l'étape 14, l'interface d'affichage parcourt les contacts du groupe de contacts selon l'ordonnancement déterminé à l'étape 10. Pour chaque contact considéré lors de ce parcours, l'interface d'affichage applique les paramètres d'affichage déterminé lors de l'étape 12 pour le contact considéré pour afficher les informations relatives au contact sur l'écran du terminal dans la surface d'affichage.

Les informations relatives à un contact affichées sur l'écran du terminal sont par exemple illustrées par la figure 3A selon un mode particulier de réalisation de l'invention. La figure 3A présente une fenêtre affichée sur l'écran du terminal et présentant des cadres 30-34 dans lesquels des informations relatives à un contact sont affichées. Par exemple, dans le cadre 30, respectivement 31-34, le nom A1, respectivement B2, C3, D4 et E5, du contact considéré est affiché au centre du cadre, une photo P1, respectivement P2-P5, peut être affichée sur la gauche du cadre 30, respectivement 31-34, et la date t1, respectivement t2-t5, de dernière communication est affichée à droite du cadre 30, respectivement 31-34.
Sur la figure 3A, les contacts C3 et E5 remplissent le deuxième critère prédéterminé correspondant par exemple à la fréquence élevée de communications que le terminal a établies avec les contacts C3 et E5. Sur la figure 3A, les contacts C3 et E5 sont mis en évidence parmi la liste de contacts A1-E5 par la taille du cadre dans lequel les informations relatives aux contacts C3 et E5 sont affichées. Sur la figure 3A, les cadres 32 et 34 sont agrandis par rapport aux cadres 30, 31 et 33 correspondant respectivement aux contacts A1, B2 et D4. L'utilisateur qui consulte la liste des contacts sur son terminal peut ainsi mieux distinguer les contacts C3 et E5 parmi la liste des contacts.
Dans le mode particulier de réalisation décrit ici, un cadre agrandi 32 et 34 est affiché dans une même fenêtre 35 qu'un cadre de taille standard 30, 31 et 33. L'utilisateur dispose ainsi de la liste de tous ses contacts sur une même fenêtre et n'a pas besoin de naviguer entre plusieurs fenêtres d'affichage selon que le contact remplit ou non le deuxième critère prédéterminé.
Selon un mode particulier de réalisation, un élément relatif à une communication établie avec le contact est également affiché dans le cadre dans lequel les informations relatives au contact sont affichées. Sur la figure 3A, le cadre 31, respectivement 32, comprend le début d'un message « msg Ib1 », respectivement « msg Ic1 », correspondant à la première ligne d'un message texte échangé entre le terminal et le contact B2, respectivement C3.
Selon ce mode particulier de réalisation de l'invention, au cours d'une étape 15 de la figure 1, pour un contact remplissant le deuxième critère prédéterminé, par exemple le contact C3 de la figure 3A, au moins un élément complémentaire, par exemple « msg I2 », est affiché dans le cadre agrandi, par exemple le cadre 32 de la figure 3A. Par exemple, l'élément complémentaire « msg I2 » correspond à la suite du dernier message texte échangé entre le terminal et le contact C3. Ainsi, pour un contact remplissant le deuxième critère prédéterminé, l'utilisateur peut aisément avoir accès dans son ensemble, au dernier message échangé avec ce contact.

La figure 3B présente une représentation de l'affichage d'un groupe de contacts associés à un terminal résultant du procédé de contrôle de l'affichage selon un autre mode particulier de réalisation de l'invention. La figure 3B reprend les mêmes éléments que la figure 3A. Selon le mode particulier de réalisation décrit par la figure 3B, les cadres 30 à 34 sont affichés avec une couleur de fond différente en fonction de l'ancienneté de la dernière communication établie avec le contact dont les informations sont affichées dans le cadre.

Selon ce mode particulier de réalisation de l'invention, lors de l'étape 12 décrite en relation avec la figure 1, les paramètres d'affichage comprennent également une couleur à appliquer au cadre pour le contact considéré, par exemple une couleur de fond. La couleur de fond est déterminée en fonction de l'ancienneté de la dernière communication établie avec le contact. Par exemple, pour une dernière communication récente, la couleur de fond est gris foncé et pour une communication ancienne la couleur de fond est gris clair. La couleur peut être dégradée en fonction de l'ancienneté. Par communication récente, on entend par exemple une communication établie il y a moins de deux jours et par communication ancienne on entend par exemple une communication établie il y a au moins un mois.
La figure 3B illustre par exemple que la dernière communication établie avec le contact C3, respectivement E5, est récente car la couleur de fond du cadre dans lequel les informations relatives au contact C3, respectivement E5, est gris foncé.
Selon ce mode particulier de réalisation de l'invention, le procédé de contrôle de l'affichage décrit en relation avec la figure 1 comprend une étape 16 de modification de la couleur du cadre, ici la couleur de fond du cadre en fonction de l'ancienneté de la dernière communication établie avec le contact dont les informations sont affichées dans le cadre. L'étape 16 de modification peut être mise en œuvre simultanément à l'étape 14 d'affichage par l'interface d'affichage.
En variante, la couleur du cadre modifiée peut être la couleur du contour du cadre ou bien la couleur de la police des éléments affichés dans le cadre.
Selon une autre variante, la modification de la couleur du cadre est mise en œuvre selon le résultat de l'étape de vérification effectuée lors de l'étape 11. Selon cette variante, la couleur du cadre est déterminée lors de l'étape 12 selon que le contact considéré vérifie ou non le deuxième critère prédéterminé. Par exemple, si le contact vérifie le deuxième critère prédéterminé, la couleur du cadre est d'une couleur foncé, par exemple vert foncé. Si le contact ne vérifie pas le deuxième critère prédéterminé, la couleur du cadre est d'une couleur claire, par exemple vert clair.

La figure 4 présente une représentation de l'affichage d'un groupe de contacts associés à un terminal résultant du procédé de contrôle de l'affichage décrit en figure 1, selon un autre mode particulier de réalisation de l'invention.
Selon ce mode particulier de réalisation de l'invention, les informations relatives à un contact sont affichées dans un cadre de forme carré. Par exemple, le cadre affiche une photo du contact. Le cadre 40 correspond à un contact ne remplissant pas le deuxième critère prédéterminé car les informations relatives à ce contact sont affichées dans un cadre de taille standard. Tandis que le cadre 41 correspond à un contact remplissant le deuxième critère prédéterminé car les informations relatives à ce contact sont affichées dans un cadre de taille agrandie par rapport à la taille standard du cadre.

La figure 2 illustre schématiquement un dispositif 20 de contrôle de l'affichage d'un groupe de contacts associés à un terminal selon un mode particulier de réalisation de l'invention.

Le dispositif 20 est apte à mettre en œuvre le procédé de contrôle de l'affichage d'un groupe de contacts associés à un terminal selon un mode particulier de réalisation de l'invention.
Le dispositif 20 comprend un module de traitement 24, comprenant notamment un module de stockage MEM, par exemple une mémoire, et une unité de traitement PROC, équipée par exemple d'un microprocesseur. L'unité de traitement PROC est pilotée par un programme d'ordinateur PG mettant en œuvre le procédé de contrôle de l'affichage d'un groupe de contacts associés à un terminal tel que décrit en relation avec la figure 1.
A l'initialisation, les instructions de code du programme d'ordinateur PG sont par exemple chargées en mémoire MEM avant d'être exécutées par le processeur de l'unité de traitement PROC.
Le processeur de l'unité de traitement PROC met en œuvre les étapes du procédé de contrôle de l'affichage d'un groupe de contacts associés à un terminal, selon les instructions du programme d'ordinateur PG. Le processeur de l'unité de traitement PROC met notamment en oeuvre :
- une étape d'ordonnancement dudit groupe de contacts selon un premier critère prédéterminé,
- pour au moins un sous-groupe du groupe de contacts, une étape d'affichage, selon ledit ordonnancement, d'au moins une information relative à chaque contact du sous-groupe dans un cadre d'une taille prédéterminée,
- lorsqu'au moins un contact du sous-groupe remplit un deuxième critère prédéterminé, une étape d'agrandissement du cadre dans lequel est affiché l'information relative audit au moins un contact.

Le dispositif 20 comprend également un dispositif d'affichage AFF, par exemple à un écran.
L'affichage sur le dispositif d'affichage AFF est contrôlé par une interface d'affichage INT. L'interface d'affichage INT est elle-même contrôlée par le processeur de l'unité de traitement PROC selon les instructions de code du programme d'ordinateur PG et du système d'exploitation SE du dispositif 20.
Le dispositif 20 comporte un module d'interaction utilisateur IN, par exemple un clavier numérique ou une interface tactile permettant à un utilisateur d'interagir sur le dispositif 20. Le module d'interaction utilisateur IN permet ainsi au dispositif 20 de détecter une interaction d'un utilisateur demandant l'affichage d'un groupe de contacts associé au dispositif 20.
Le dispositif 20 comporte également un module de communication COM permettant au dispositif 20 de se connecter à un réseau de communication et d'échanger des données avec des terminaux connectés à ce réseau de communication, ou d'établir des communications avec d'autres terminaux.
Selon un mode particulier de réalisation de l'invention, le module de stockage MEM permet de stocker les informations relatives aux contacts du groupe de contacts. L'unité de traitement PROC communique avec le module de stockage MEM afin de fournir à l'interface d'affichage INT les informations relatives aux contacts du groupe de contacts à afficher.
Selon un autre mode particulier de réalisation de l'invention, les informations relatives aux contacts du groupe de contact sont stockées sur un support de stockage distant, par exemple un serveur d'un réseau de communication (non représenté). Dans ce mode particulier de réalisation de l'invention, le dispositif 20 communique avec le serveur du réseau de communication afin d'obtenir les informations relatives aux contacts du groupe de contacts à afficher.

Selon un mode particulier de réalisation de l'invention, le dispositif 20 est compris dans un terminal, tel qu'un terminal mobile, ou fixe, ou une tablette.

## Revendications

1. Procédé de contrôle de l'affichage d'un groupe de contacts associés à un terminal, le procédé comprenant :
- une étape d'ordonnancement (10) dudit groupe de contacts selon un premier critère correspondant à un ordre alphabétique ou à un ordre chronologique,
- pour au moins un sous-groupe du groupe de contacts, une étape d'affichage (14), selon ledit ordonnancement, d'au moins une information relative à chaque contact du sous-groupe dans un cadre d'une taille prédéterminée,
- lorsqu'au moins un contact du sous-groupe remplit (11) un deuxième critère, une étape d'agrandissement (12) du cadre dans lequel est affichée l'information relative audit au moins un contact,
le procédé est **caractérisé en ce qu'**une première ligne d'un message textuel échangé avec un contact est également affiché dans le cadre associé audit contact, et pour le au moins un contact remplissant le deuxième critère, à la fois la première ligne et au moins une deuxième ligne du message textuel échangé avec le contact est affiché dans ledit cadre agrandi.

2. Procédé de contrôle de l'affichage selon la revendication 1, dans lequel le deuxième critère correspond à la fréquence avec laquelle le terminal et un contact considéré lors de l'étape d'ordonnancement établissent des communications.

3. Procédé de contrôle de l'affichage selon l'une quelconque des revendications 1 à 2, dans lequel le cadre agrandi et un cadre de taille prédéterminée sont affichés dans une même fenêtre sur un dispositif d'affichage du terminal.

4. Procédé de contrôle de l'affichage selon l'une quelconque des revendications 1 à 3, dans lequel, lorsque le cadre dans lequel au moins une information relative à un contact du groupe de contacts est affichée comprend une couleur prédéterminée ou une image prédéterminée, le procédé comprend en outre une étape de modification de la couleur ou de l'image dudit cadre en fonction de l'ancienneté de la dernière communication établie avec ledit contact.

5. Dispositif de contrôle de l'affichage d'un groupe de contacts associés à un terminal, comprenant :
- un module de gestion de l'affichage (INT) apte à commander l'affichage d'au moins une information relative à chaque contact d'au moins un sous-groupe du groupe de contacts, l'information étant affichée dans un cadre d'une taille prédéterminée, les contacts du sous-groupe étant affichés selon un ordonnancement dudit groupe de contacts déterminé selon un premier critère correspondant à un ordre alphabétique ou à un ordre chronologique,
- un module de traitement (PG, PROC) coopérant avec le module de gestion de l'affichage, le module de traitement étant :
∘ apte à vérifier si au moins un contact du sous-groupe remplit un deuxième critère,
∘ apte à agrandir la taille du cadre dans lequel la au moins une information relative audit au moins un contact est affichée lorsque le au moins un contact du sous-groupe remplit le deuxième critère,
le dispositif de contrôle de l'affichage est **caractérisé en ce que** le module de gestion de l'affichage est apte à commander l'affichage :
• d'une première ligne d'un message textuel échangé avec un contact dans le cadre associé audit contact, et,
• pour le au moins un contact remplissant le deuxième critère, à la fois de la première ligne et d'au moins une deuxième ligne du message textuel échangé avec le contact, dans ledit cadre agrandi.

6. Terminal comprenant un dispositif de contrôle de l'affichage selon la revendication 5.

7. Programme d'ordinateur comportant des instructions de code de programme pour l'exécution des étapes du procédé d'affichage selon l'une quelconque des revendications 1 à 4, lorsque le programme est exécuté par un processeur.

## Patentansprüche

1. Verfahren zur Kontrolle der Anzeige einer Gruppe von einem Endgerät zugeordneten Kontakten, wobei das Verfahren enthält:
- einen Schritt der Anordnung (10) der Gruppe von Kontakten gemäß einem ersten Kriterium entsprechend einer alphabetischen Reihenfolge oder einer chronologischen Reihenfolge,
- für mindestens eine Teilgruppe der Gruppe von Kontakten, einen Schritt der Anzeige (14), gemäß der Anordnung, mindestens einer Information bezüglich jedes Kontakts der Teilgruppe in einem Rahmen einer vorbestimmten Größe,
- wenn mindestens ein Kontakt der Teilgruppe ein zweites Kriterium erfüllt (11), einen Schritt der Vergrößerung (12) des Rahmens, in dem die Information bezüglich des mindestens einen Kontakts angezeigt wird,
wobei das Verfahren **dadurch gekennzeichnet ist, dass** eine erste Zeile einer mit einem Kontakt ausgetauschten Textnachricht ebenfalls in dem dem Kontakt zugeordneten Rahmen angezeigt wird, und für den mindestens einen Kontakt, der das zweite Kriterium erfüllt, sowohl die erste Zeile und mindestens eine zweite Zeile der mit dem Kontakt ausgetauschten Textnachricht im vergrößerten Rahmen angezeigt werden.

2. Kontrollverfahren der Anzeige nach Anspruch 1, wobei das zweite Kriterium der Häufigkeit entspricht, mit der das Endgerät und ein im Schritt der Anordnung berücksichtigter Kontakt Kommunikationen aufbauen.

3. Kontrollverfahren der Anzeige nach einem der Ansprüche 1 bis 2, wobei der vergrößerte Rahmen und ein Rahmen vorbestimmter Größe in einem gleichen Fenster auf einer Anzeigevorrichtung des Endgeräts angezeigt werden.

4. Kontrollverfahren der Anzeige nach einem der Ansprüche 1 bis 3, wobei, wenn der Rahmen, in dem mindestens eine Information bezüglich eines Kontakts der Gruppe von Kontakten angezeigt wird, eine vorbestimmte Farbe oder ein vorbestimmtes Bild enthält, das Verfahren außerdem einen Schritt der Änderung der Farbe oder des Bilds des Rahmens abhängig vom Alter der letzten mit dem Kontakt aufgebauten Kommunikation enthält.

5. Kontrollvorrichtung der Anzeige einer Gruppe von einem Endgerät zugeordneten Kontakten, die enthält:
- ein Verwaltungsmodul der Anzeige (INT), das die Anzeige mindestens einer Information bezüglich jedes Kontakts mindestens einer Teilgruppe der Gruppe von Kontakten steuern kann, wobei die Information in einem Rahmen einer vorbestimmten Größe angezeigt wird, wobei die Kontakte der Teilgruppe gemäß einer Anordnung der Gruppe von Kontakten angezeigt werden, die gemäß einem ersten Kriterium entsprechend einer alphabetischen Reihenfolge oder einer chronologischen Reihenfolge bestimmt wird,
- ein Verarbeitungsmodul (PG, PROC), das mit dem Verwaltungsmodul der Anzeige zusammenwirkt, wobei das Verarbeitungsmodul:
∘ fähig ist, zu überprüfen, ob mindestens ein Kontakt der Teilgruppe ein zweites Kriterium erfüllt,
∘ fähig ist, die Größe des Rahmens zu vergrößern, in dem die mindestens eine Information bezüglich des mindestens einen Kontakts angezeigt wird, wenn der mindestens eine Kontakt der Teilgruppe das zweite Kriterium erfüllt,
wobei die Kontrollvorrichtung der Anzeige **dadurch gekennzeichnet ist, dass** das Verwaltungsmodul der Anzeige die Anzeige steuern kann von:
• einer ersten Zeile einer mit einem Kontakt ausgetauschten Textnachricht in dem dem Kontakt zugeordneten Rahmen, und
• für den mindestens einen Kontakt, der das zweite Kriterium erfüllt, sowohl der ersten Zeile und mindestens einer zweiten Zeile der mit dem Kontakt ausgetauschten Textnachricht in dem vergrößerten Rahmen.

6. Endgerät, das eine Kontrollvorrichtung der Anzeige nach Anspruch 5 enthält.

7. Computerprogramm, das Programmcodeanweisungen zur Ausführung der Schritte des Anzeigeverfahrens nach einem der Ansprüche 1 bis 4 aufweist, wenn das Programm von einem Prozessor ausgeführt wird.

## Claims

1. Method for controlling the display of a group of contacts associated with a terminal, the method comprising:
- a step (10) of arranging said group of contacts according to a first criterion corresponding to an alphabetical or chronological order,
- for at least one subgroup of the group of contacts, a step (14) of displaying, according to said arrangement, at least one piece of information relating to each contact of the subgroup in a frame of a predetermined size,
- when at least one contact of the subgroup meets (11) a second criterion, a step (12) of enlarging the frame in which the piece of information relating to said at least one contact is displayed,
the method is **characterized in that** a first line of a text message exchanged with a contact is also displayed in the frame associated with said contact, and for the at least one contact which meets the second criterion, both the first line and at least a second line of the text message exchanged with the contact is displayed in said enlarged frame.

2. Display control method according to Claim 1, wherein the second criterion corresponds to the frequency with which the terminal and a contact considered during the arrangement step establish communications.

3. Display control method according to either of Claims 1 and 2, wherein the enlarged frame and a frame of predetermined size are displayed in the same window on a display device of the terminal.

4. Display control method according to any one of Claims 1 to 3, wherein, when the frame in which at least one piece of information relating to a contact of the group of contacts is displayed comprises a predetermined colour or a predetermined image, the method additionally comprises a step of modifying the colour or the image of said frame according to the age of the last communication established with said contact.

5. Device for controlling the display of a group of contacts associated with a terminal, comprising:
- a display management module (INT) suitable for controlling the display of at least one piece of information relating to each contact of at least one subgroup of the group of contacts, the information being displayed in a frame of predetermined size, the contacts of the subgroup being displayed according to an arrangement of said group of contacts that is determined according to a first criterion corresponding to an alphabetical order or a chronological order,
- a processing module (PG, PROC) cooperating with the display management module, the processing module being:
∘ suitable for verifying whether at least one contact of the subgroup meets a second criterion,
∘ suitable for enlarging the size of the frame in which the at least one piece of information relating to said at least one contact is displayed when the at least one contact of the subgroup meets the second criterion,
the display control device is **characterized in that** the display management module is capable of controlling the display:
• of a first line of a text message exchanged with a contact in the frame associated with said contact, and
• for the at least one contact which meets the second criterion, both the first line and at least a second line of the text message exchanged with the contact, in said enlarged frame.

6. Terminal comprising a display control device according to Claim 5.

7. Computer program including program code instructions for the execution of the steps of the display method according to any one of Claims 1 to 4, when the program is executed by a processor.
